# FASCICULE DE BREVET EUROPEEN

(11) **EP 1 088 476 B1**
(45) Date de publication et mention de la délivrance du brevet: **10.03.2004**
(21) Numéro de dépôt: 00420202.4
(22) Date de dépôt: 29.09.2000
(51) Int. Cl.: A01D 34/76

(54) **Tête de coupe pour débroussailleuses et taille-bordures**
Schneidekopf für Buschmäher und Kantentrimmer
Cutter head for brushcutter and edge trimmer

(30) Priorité: 29.09.1999 FR 9912421
(43) Date de publication de la demande: 04.04.2001
(73) Titulaire: Speed France, 69658 Arnas (FR)
(72) Inventeur: Legrand, Emmanuel, 01480 Villeneuve (FR)
(74) Mandataire: Bratel, Gérard

(56) Documents cités:
- EP-A- 0 399 503
- EP-A- 0 460 563
- DE-A- 1 936 010
- DE-U- 29 809 778
- FR-A- 2 231 484
- FR-A- 2 331 949
- US-A- 3 385 043
- US-A- 5 012 633
- PATENT ABSTRACTS OF JAPAN vol. 017, no. 499 (C-1109), 9 septembre 1993 (1993-09-09) & JP 05 137441 A (KOJI SAKATA), 1 juin 1993 (1993-06-01)

## Description

La présente invention concerne les appareils de motoculture communément appelés débroussailleuses et taille-bordures, qui sont destinés à couper l'herbe, ou plus généralement la végétation, au moyen de fils de coupe. Cette invention s'intéresse, plus particulièrement, aux têtes de coupe à mouvement rotatif, pour de tels appareils.

Les débroussailleuses et taille-bordures sont généralement équipés d'un moteur thermique ou électrique qui entraîne en rotation, à une vitesse élevée pouvant être comprise entre environ 3000 et 12000 tours/minute, une tête tournante supportant un ou plusieurs fils de coupe, le plus souvent réalisés en matière synthétique, mais pouvant aussi être des fils composites, avec des parties métalliques ou en matière minérale. Au cours de la rotation de la tête, et sous l'effet de la force centrifuge, le ou les fils de coupe se déploient radialement et balayent ainsi une certaine zone circulaire, à l'intérieur de laquelle ils exercent un effet tranchant sur l'herbe ou la végétation rencontrée.

Dans tous les cas, les têtes de coupe sont entraînées en rotation, avec leurs fils de coupe, dans un sens constant et unique. Il en résulte que, lors de l'utilisation des débroussailleuses et taille-bordures actuels, l'herbe ou la végétation est le plus souvent "couchée" par les fils de coupe qui la rencontrent, au lieu d'être coupée de façon directe, immédiate et certaine, ce qui est préjudiciable à la rapidité et à la netteté de la coupe. Il en résulte aussi, dans le cas de fils de coupe en matière synthétique, une usure relativement rapide de ces fils, par friction contre l'herbe ou la végétation couchée.

Pour tenter d'améliorer le fonctionnement et l'efficacité des têtes de coupe et de leurs fils de coupe, les voies de recherche actuelles consistent, principalement, à multiplier les fils de coupe, ou à donner à ces fils un profil particulier, censé améliorer leur pouvoir coupant ou leur résistance mécanique, ou encore diminuer le niveau sonore en cours de fonctionnement.

La présente invention vise à éliminer ces inconvénients des têtes de coupe actuelles, à fils de coupe, en fournissant une tête de coupe perfectionnée, qui en cours d'utilisation ne couche plus l'herbe ou la végétation, et procure ainsi une coupe plus rapide et plus nette, tout en réduisant l'usure des fils de coupe.

A cet effet, l'invention a essentiellement pour objet une tête de coupe pour débroussailleuses et taille-bordures, du genre de celles comportant des fils coupe entraînés en rotation, caractérisée en ce qu'elle comporte, en combinaison :
- un premier rotor portant au moins un fil de coupe, entraîné en rotation autour de son axe, en cours de fonctionnement, dans un sens prédéterminé, et
- un second rotor portant au moins un fil de coupe, monté suivant le même axe que le premier rotor, mais entraîné en rotation autour de cet axe, en cours de fonctionnement, dans le sens opposé au sens de rotation du premier rotor,
de telle sorte que l'herbe ou la végétation soit coupée par effet de cisaillement des fils de coupe tournant en sens opposés.

Ainsi, une tête de coupe selon l'invention possède deux rotors à fils de coupe, coaxiaux et tournant en sens opposés, de telle sorte que leurs fils, agissant en sens opposés, ne couchent plus l'herbe ou la végétation, mais la coupent de façon rapide et nette, par un effet de "ciseaux". Dans la mesure où les deux rotors entraînés en sens opposés sont superposés, les fils du rotor "inférieur" assurent plus particulièrement la coupe de l'herbe ou de la végétation, tandis que les fils du rotor "supérieur" la broyent.

Par ailleurs, l'usure des fils de coupe se trouve réduite ou ralentie, et la tête de coupe, objet de l'invention, possède l'avantage supplémentaire de réduire le bruit engendré en cours de fonctionnement. En effet, les fils de coupe, tournant en sens opposés, engendrent des flux d'air eux-mêmes opposés, qui créent des perturbations susceptibles de diminuer le niveau sonore, donc les nuisances provoquées par les débroussailleuses et taille-bordures. En particulier, l'invention permet de réduire certains sifflements gênants.

La mise en oeuvre de l'invention implique l'entraînement en rotation, en sens opposés et de façon simultanée, de deux rotors porteurs de fils de coupe, montés coaxialement l'un au-dessus de l'autre. Or les débroussailleuses et taille-bordures possèdent habituellement une prise de mouvement unique, entraînée en rotation dans un sens donné par le moteur thermique ou électrique. La tête de coupe, objet de la présente invention, est donc avantageusement équipée de moyens mécaniques internes qui, à partir de la prise de mouvement rotatif de la débroussailleuse ou du taille-bordures, assurent l'entraînement en rotation, en sens opposés, de ses deux rotors. Ces moyens mécaniques peuvent, en particulier, comprendre un accouplement direct entre ladite prise de mouvement rotatif et l'un des deux rotors, et un dispositif d'inversion de mouvement monté entre l'un des deux rotors, ou son arbre, et l'autre rotor, ou son arbre. Le dispositif d'inversion de mouvement peut être un dispositif à engrenages, ou à organes de friction tels que billes ou galets.

Par exemple, dans le cas d'un dispositif d'inversion de mouvement à billes, qui constitue une solution simple, économique, fiable et d'un bon rendement, la tête de coupe comprend une cage fixe dans laquelle sont positionnées les billes, et une rondelle liée en rotation avec l'arbre d'un rotor directement accouplé à la prise de mouvement rotatif, cette rondelle étant mobile axialement par rapport audit arbre et étant pressée par des moyens à ressort contre un côté des billes, ces dernières prenant appui, par leur côté opposé, contre une surface annulaire solidaire de l'autre rotor.

L'invention sera de toute façon mieux comprise à l'aide de la description qui suit, en référence au dessin schématique annexé représentant, à titre d'exemple, une forme d'exécution de cette tête de coupe pour débroussailleuses et taille-bordures :
Figure 1 est une vue d'ensemble, en perspective, d'une tête de coupe à fils, conforme à la présente invention, montée sur une débroussailleuse représentée très partiellement ;
Figure 2 est une vue en coupe passant par l'axe de la tête de figure 1 ;
Figure 3 est une vue en coupe transversale de cette tête, suivant III-III de figure 2.

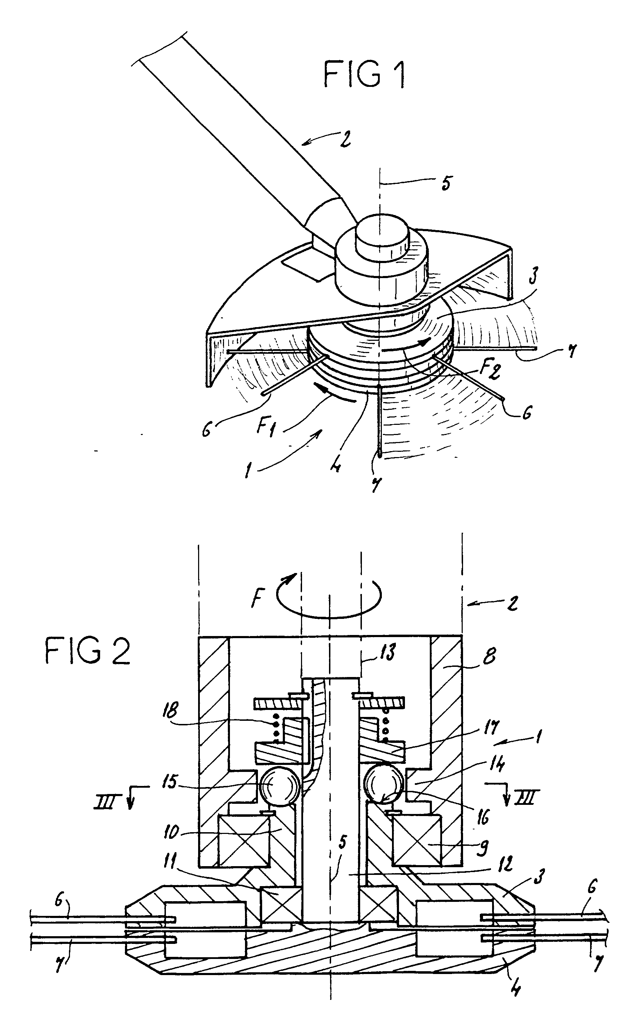

En se référant d'abord à la figure 1, la tête de coupe désignée globalement par le repère 1, est montée à l'extrémité d'une débroussailleuse ou d'un taille-bordures, représenté partiellement en 2, qui est équipé d'un moteur thermique ou électrique. La tête de coupe 1 comporte deux rotors superposés, soit un rotor supérieur 3 et un rotor inférieur 4, montés tournants autour d'un axe commun 5.

Comme le montre aussi la figure 2, le rotor supérieur 3 porte, à sa périphérie, une pluralité de brins individuels de fil de coupe 6, dirigés radialement, qui sont régulièrement espacés angulairement et sont retenus individuellement sur ce rotor 3 par des moyens appropriés. De manière similaire, le rotor inférieur 4 porte, à sa périphérie, une pluralité de brins individuels de fil de coupe 7, dirigés radialement, qui sont régulièrement espacés angulairement et sont retenus individuellement sur ce rotor 4 par des moyens appropriés. A titre d'exemple, chaque rotor 3 ou 4 est garni de quatre brins de fil de coupe 6 et 7, en matière synthétique ou autre, séparés les uns des autres par des intervalles angulaires de 90°.

La tête de coupe 1 comporte un boîtier 8, de forme générale cylindrique, prévue pour être fixée à l'extrémité de la débroussailleuse ou du taille-bordures 2. Le boîtier 8 supporte un palier 9, dans lequel est monté tournant un arbre tubulaire 10 solidaire du rotor supérieur 3.

Le rotor supérieur 3 porte lui-même, intérieurement, un palier 11 dans lequel est monté un arbre central plein 12, solidaire du rotor inférieur 4. L'arbre 12 du rotor inférieur 4 traverse l'arbre tubulaire 10 du rotor supérieur 3, en direction du haut, l'extrémité supérieure de l'arbre 12 étant prévue pour être accouplée à la prise de mouvement rotatif 13, appartenant à la débroussailleuse ou au taille-bordures 2.

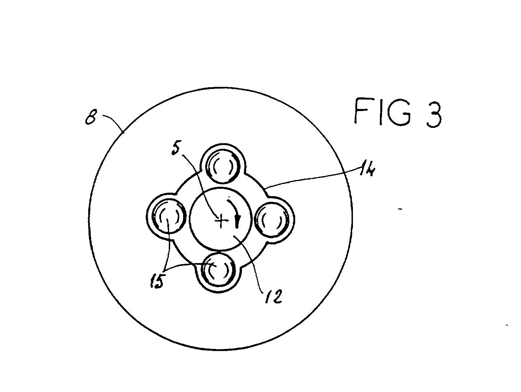

Comme le montre plus particulièrement la figure 3, le boîtier cylindrique 8 forme intérieurement, à mi-hauteur, une cage 14 dans laquelle sont positionnées plusieurs billes 15, disposées à intervalles angulaires réguliers. Les billes 15 prennent appui sur une surface annulaire 16 (voir figure 2), située au sommet de l'arbre tubulaire 10 du rotor supérieur 3.

L'arbre massif 12 du rotor inférieur 4 porte, au-dessus des billes 15, une rondelle 17 liée en rotation avec cet arbre 12, mais mobile axialement par rapport audit arbre 12. Un ressort 18 (ressort hélicoïdal ou rondelles Belleville), prenant appui sur l'arbre 12, presse la rondelle 17 contre les billes 15, et met simultanément ces billes 15 en pression contre la surface annulaire 16 de l'arbre 10.

En cours de fonctionnement, la prise de mouvement 13 est entraînée en rotation, dans un sens donné indiqué par une flèche F (voir figure 2), par le moteur de la débroussailleuse ou du taille-bordures 2. Par l'intermédiaire de son arbre 12, le rotor inférieur 4 est entraîné en rotation autour de l'axe 5, dans le sens indiqué par une flèche F1, qui est le même que le sens de rotation F de la prise de mouvement 13.

La rondelle 17, entraînée aussi en rotation dans ce sens par l'arbre 12, fait tourner les billes 15 autour de leurs centres respectifs, maintenus fixes puisque ces billes 15 sont retenues par la cage 14. Il en résulte que l'arbre tubulaire 10 est entraîné en rotation, autour de l'axe 5, dans le sens contraire de l'arbre 12. Le rotor supérieur 3, solidaire de l'arbre 12, tourne donc lui aussi autour de l'axe 5 dans un sens, indiqué par une flèche F2, qui est opposé au sens de rotation F1 du rotor inférieur 4, les vitesses de rotation des deux rotors 3 et 4 étant égales (en valeur absolue).

Il en résulte que les brins de fils de coupe 6, portés par le rotor supérieur 3, tournent eux aussi autour de l'axe 5 dans le sens inverse des brins de fil de coupe 7 portés par le rotor inférieur 4. L'action conjuguée de ces brins de fil 6 et 7, tournant à grande vitesse et en sens opposés les uns des autres, crée un effet de cisaillement qui améliore la coupe de l'herbe ou de la végétation, toute en évitant de la coucher et en réduisant le bruit.

L'on ne s'éloignerait pas du cadre de l'invention, telle que définie dans les revendications :
- en utilisant tout mécanisme approprié d'inversion du mouvement, pour entraîner en rotation l'un des deux rotors dans le sens inverse de l'autre ;
- en donnant au boîtier de cette tête de coupe toute forme extérieure désirée ;
- en modifiant le nombre des brins de fil de coupe portés par chacun des deux rotors, et en réalisant les fils de coupe en toute matière adaptée ;
- en prévoyant tous moyens de retenue pour les brins de fil de coupe, ou en substituant, à ces brins individuels, des fils de coupe continus, se dévidant d'une bobine.

## Revendications

1. Tête de coupe pour débroussailleuses et taille-bordures, comportant des fils de coupe entraînés en rotation, **caractérisée en ce qu'**elle comporte, en combinaison :
- un premier rotor (3) portant au moins un fil de coupe (6), entraîné autour de son axe (5), en cours de fonctionnement, dans un sens prédéterminé (F2), et
- un second rotor (4) portant au moins un fil de coupe (7), monté suivant le même axe (5) que le premier rotor (3), mais entraîné en rotation autour de cet axe (5), en cours de fonctionnement, dans le sens (F1) opposé au sens de rotation (F2) du premier rotor (3),
de telle sorte que l'herbe ou la végétation soit coupée par effet de cisaillement, des fils de coupe (6, 7) tournant en sens opposés.

2. Tête de coupe pour débroussailleuses et taille-bordures selon la revendication 1, **caractérisée en ce qu'**elle est équipée de moyens mécaniques internes (9 à 12, 14 à 18) qui, à partir de la prise de mouvement rotatif (13) de la débroussailleuse ou du taille-bordures (2), assurent l'entraînement en rotation, en sens opposés (F1, F2), de ses deux rotors (3, 4).

3. Tête de coupe pour débroussailleuses et taille-bordures selon la revendication 2, **caractérisée en ce que** les moyens mécaniques précités comprennent un accouplement direct (12) entre ladite prise de mouvement rotatif (13) et l'un (4) des deux rotors (3, 4), et un dispositif d'inversion de mouvement (14 à 18) monté entre l'un (4) des deux rotors, ou son arbre (12), et l'autre rotor (3) ou son arbre (10).

4. Tête de coupe pour débroussailleuses et taille-bordures selon la revendication 3, **caractérisée en ce que** le dispositif d'inversion de mouvement est un dispositif à billes (15), qui comprend une cage fixe (14) dans laquelle sont positionnées les billes (15), et une rondelle (17) liée en rotation avec l'arbre (12) d'un rotor (4) directement accouplé à la prise de mouvement rotatif (13), cette rondelle (17) étant mobile axialement par rapport audit arbre (12) et étant pressée par des moyens à ressort (18) contre un côté des billes (15), ces dernières prenant appui, par leur côté opposé, contre une surface annulaire (16) solidaire de l'autre rotor (3).

5. Tête de coupe pour débroussailleuses et taille-bordures selon l'une quelconque des revendications 1 à 4, **caractérisée en ce qu'**elle comporte deux rotors (3, 4) qui portent, à leur périphérie, des brins individuels de fils de coupe (6, 7) dirigés radialement, l'effet de cisaillement étant créé par ces brins de fil de coupe (6, 7) tournant en sens opposés les uns des autres.

## Claims

1. Cutting head for strimmers and edge cutters, comprising cutting threads which are rotated, **characterised in that** it comprises, in combination:
- a first rotor (3) which supports at least one cutting thread (6), which is driven around its axis (5) during operation, in a predetermined direction (F2); and
- a second rotor (4) which supports at least one cutting thread (7), and is fitted according to the same axis (5) as the first rotor (3), but is rotated around this axis (5) during operation, in the direction (F1) opposite the direction of rotation (F2) of the first rotor (3),
such that the grass or vegetation is cut by a shearing effect of the cutting threads (6, 7) rotating in opposite directions.

2. Cutting head for strimmers and edge cutters according to claim 1, **characterised in that** it is equipped with internal mechanical means (9 to 12, 14 to 18) which, starting from the rotary main drive (13) of the strimmer or edge cutter (2), assure rotation in opposite directions (F1, F2) of its two rotors (3, 4).

3. Cutting head for strimmers and edge cutters according to claim 2, **characterised in that** the aforementioned mechanical means comprise direct coupling (12) between the said rotary main drive (13) and one (4) of the two rotors (3, 4), and a movement inversion device (14 to 18) which is fitted between one (4) of the two rotors or its shaft (12) and the other rotor (3) or its shaft (10).

4. Cutting head for strimmers and edge cutters according to claim 3, **characterised in that** the movement inversion device is a ball device (15) which comprises a fixed cage (14) in which the balls (15) are positioned, and a washer (17) which is connected in rotation with the shaft (12) of a rotor (4) which is directly coupled to the rotary main drive (13), this washer (17) being mobile axially relative to the said shaft (12) and being pressed by spring means (18) against one side of the balls (15), the latter being supported on their opposite side against an annular surface (16) which is integral with the other rotor (3).

5. Cutting head for strimmers and edge cutters according to any one of claims 1 to 4, **characterised in that** it comprises two rotors (3, 4) which on their periphery support individual strands of cutting threads (6, 7) which are directed radially, the shearing effect being created by these strands of cutting thread (6, 7) rotating in directions opposite to one another.

## Patentansprüche

1. Schneidekopf für Buschmäher und Kantentrimmer mit Schneidfäden, die in eine Rotationsbewegung versetzt werden, **dadurch gekennzeichnet, dass** er in Kombination umfasst:
- einen ersten Rotor (3), der mindestens einen Schneidfäden (6) trägt und während des Betriebs in einer vorbestimmten Richtung (F2) um seine Achse (5) angetrieben wird, und
- einen zweiten Rotor (4), der mindestens einen Schneidfäden (7) trägt und gemäß der gleichen Achse (5) wie der erste Rotor (3) montiert ist, jedoch während des Betriebs in der Richtung (F1) um diese Achse (5) in eine Drehbewegung versetzt wird, die der Rotationsrichtung (F2) des ersten Rotors (3) entgegengesetzt ist,
derart, dass das Gras oder die Vegetation durch Scherenwirkung der sich in entgegengesetzter Richtung drehenden Schneidedrähte geschnitten wird.

2. Schneidekopf für Buschmäher und Kantentrimmer nach Anspruch 1, **dadurch gekennzeichnet, dass** er mit inneren mechanischen Mitteln (9 bis 12, 14 bis 18) versehen ist, die ausgehend von dem Antrieb (13) für die Drehbewegung des Buschmähers oder Kantentrimmers (2) dafür sorgen, dass die beiden Rotoren (3, 4) in entgegengesetzten Richtungen (F1, F2), in eine Drehbewegung versetzt werden.

3. Schneidekopf für Buschmäher und Kantentrimmer nach Anspruch 2, **dadurch gekennzeichnet, dass** die oben genannten mechanischen Mittel eine direkte Kopplung (12) zwischen dem Antrieb für die Drehbewegung (13) und einem (4) der beiden Rotoren (3, 4) und eine Vorrichtung zur Umkehrung der Bewegung (14 bis 18) umfassen, die zwischen dem einen (4) der beiden Rotoren oder seiner Welle (12) und dem anderen Rotor (3) oder seiner Welle (10) montiert ist.

4. Schneidekopf für Buschmäher und Kantentrimmer nach Anspruch 3, **dadurch gekennzeichnet, dass** die Vorrichtung zur Umkehrung der Bewegung eine Vorrichtung mit Kugeln (15) ist, die einen fixen Käfig (14), in dem sich die Kugeln (15) befinden, und eine Scheibe (17) umfasst, die drehbeweglich mit der Welle (12) eines Rotors (4) verbunden ist, der direkt mit der Kraftabnahme für die Drehbewegung (13) gekoppelt ist, wobei diese Scheibe (17) in Bezug auf die Welle (12) axial beweglich ist und durch Federmittel (18) gegen eine Seite der Kugeln (15) gedrückt wird, wobei die letztgenannten durch ihre entgegengesetzte Seite gegen eine ringförmige Fläche (16) drücken, die mit dem anderen Rotor (3) fest verbunden ist.

5. Schneidekopf für Buschmäher und Kantentrimmer nach einem der Ansprüche 1 bis 4, **dadurch gekennzeichnet, dass** er zwei Rotoren (3, 4) umfasst, die an ihrer Peripherie einzelne, radial ausgerichtete Schneidfadenstücke (6, 7) tragen, wobei die Scherenwirkung durch diese Schneidfadenstücke (6, 7) erzeugt wird, die sich in zueinander entgegengesetzter Richtung drehen.
